# FASCICULE DE BREVET EUROPEEN

(11) **EP 3 428 485 B1**
(45) Date de publication et mention de la délivrance du brevet: **02.09.2020**
(21) Numéro de dépôt: 18182920.1
(22) Date de dépôt: 11.07.2018
(51) Int. Cl.: F16H 61/444, B60K 17/356, B60K 7/00, B60K 23/08

(54) **SYSTÈME DE TRANSMISSION HYDROSTATIQUE COMPRENANT DES MOYENS DE LIMITATION D'ACCÉLÉRATION LORS D'UN CHANGEMENT DE CYLINDRÉE, PROCÉDÉ DE PILOTAGE ET VÉHICULE ET ENGIN AINSI ÉQUIPÉ**
HYDROSTATISCHES ÜBERTRAGUNGSSYSTEM, DAS BESCHLEUNIGUNGSBEGRENZUNGSMITTEL BEI EINER HUBRAUM-UMSCHALTUNG UMFASST, STEUERUNGSVERFAHREN UND FAHRZEUG SOWIE DAMIT AUSGERÜSTETES GERÄT
HYDROSTATIC TRANSMISSION SYSTEM COMPRISING ACCELERATION LIMITATION MEANS DURING DISPLACEMENT CHANGE, CONTROL METHOD AND VEHICLE AND MACHINERY THUS EQUIPPED

(30) Priorité: 12.07.2017 FR 1756632
(43) Date de publication de la demande: 16.01.2019
(73) Titulaire: Poclain Hydraulics Industrie, 60410 Verberie (FR)
(72) Inventeur: BOUTIN, Christelle, 60410 Verberie (FR); PAMART, Sébastien, 60410 Verberie (FR); CHAPEROT, Stéphane, 60410 Verberie (FR)
(74) Mandataire: Regimbeau

(56) Documents cités:
- EP-A1- 0 993 982
- US-A- 3 827 239
- US-A- 5 101 925
- US-A- 6 119 802
- US-A1- 2016 169 357

## Description

La présente invention concerne le domaine des transmissions hydrostatiques pour des engins motorisés par des moteurs équipant des roues.

De tels moteurs sont généralement dénommés « moteurs-roues ».

En particulier, de tels moteurs peuvent incorporer la fonction de paliers incluant des roulements et un arbre de roue.

De tels moteurs peuvent également incorporer des freins statiques ou hydrauliques. Ces moteurs sont particulièrement avantageux pour être placés sur les machines enjambeuses sans essieu, pour avoir une traction hydrostatique sur des roues directrices, ou pour les machines à hauteur variable.

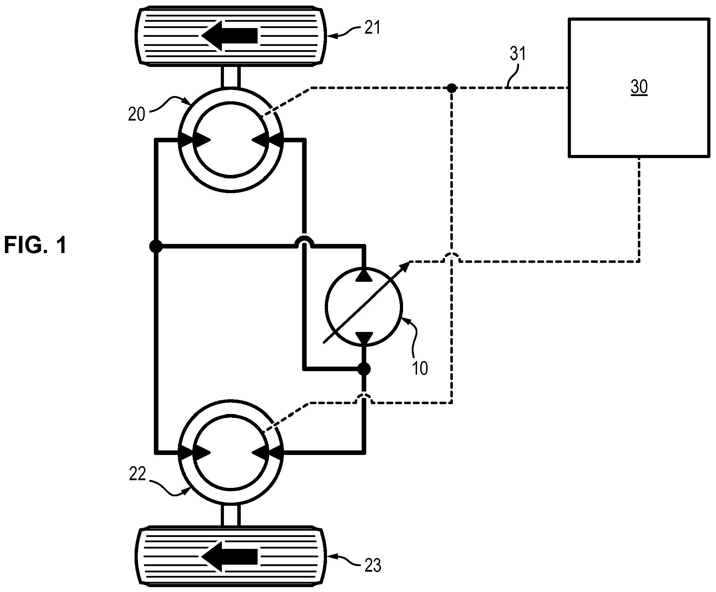

Plus précisément, la présente invention concerne les systèmes de transmission hydrostatique du type illustré sur la figure 1 annexée comprenant au moins une pompe 10 et deux moteurs-roues 20, 22, typiquement un moteur-roue droit 20 et un moteur-roue gauche 22, alimentés par la pompe 10, pour la motorisation d'un engin.

La pompe 10 est généralement actionnée par un moteur thermique.

La combinaison d'une pompe 10, typiquement actionnée par un moteur thermique, et de moteurs-roues 20, 22 constitue une transmission hydrostatique.

D'une manière connue, on peut faire varier le rapport de démultiplication de la transmission en faisant varier la cylindrée de la pompe 10 et éventuellement des moteurs 20, 22.

D'une manière habituelle, les machines à transmission hydrostatique sont pilotées en débit ou en pression via un contrôle de cylindrée de la pompe. Pour les engins équipés d'une pompe 10 à cylindrée variable, l'arrêt de la machine peut s'obtenir par la mise à zéro de la cylindrée de la pompe.

Sur la figure 1, le contrôle de la cylindrée de la pompe 10 et des moteurs 20, 22 est opéré par un module de commande 30.

Sur la figure 1, on a référencé 21 et 23, les roues associées respectivement aux moteurs 20 et 22.

L'on notera que la ligne de commande 31 issue du module de commande 30 et appliquée à la cylindrée des moteurs 20, 22 est commune aux deux moteurs 20, 22.

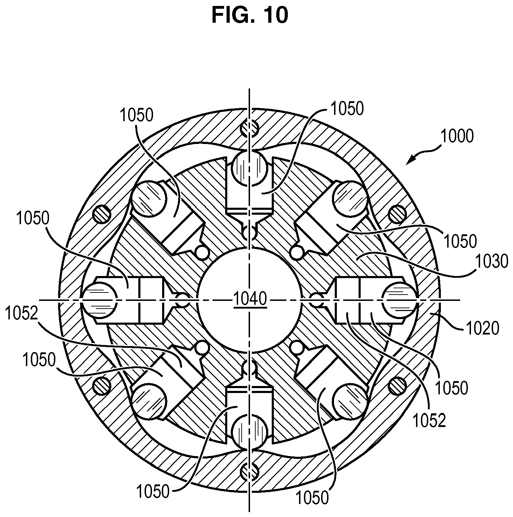

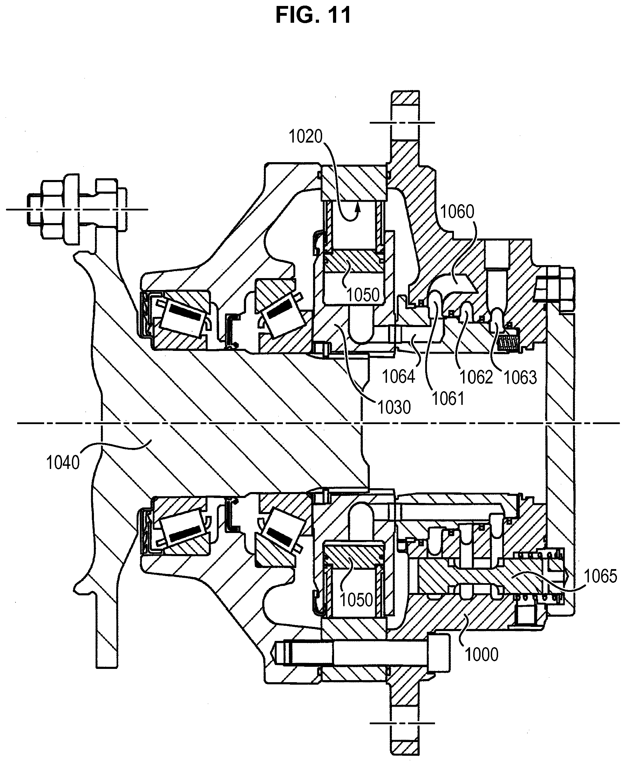

La présente invention s'applique en particulier à des moteurs-roues du type à came et pistons radiaux. De tels moteurs à came et pistons radiaux sont bien connus de l'état de l'art. La société Poclain en particulier commercialise de nombreux moteurs de ce type. Ces moteurs ne seront donc pas décrits en détail par la suite. Cependant la structure générale de tels moteurs à came et pistons radiaux sera rappelée en regard des figures 10 et 11 annexées.

Les moteurs hydrauliques à came et pistons radiaux sont généralement des moteurs à cylindrée fixe.

Cependant, certains moteurs hydrauliques sont constitués de plusieurs sous moteurs.

Il est ainsi possible d'alimenter un ou plusieurs sous-moteurs, ce qui permet d'obtenir des cylindrées différentes.

Une forte cylindrée des moteurs apporte du couple et une faible cylindrée apporte de la vitesse.

La commutation d'un mode d'alimentation à l'autre, en cylindrée, peut se faire à l'arrêt ou en roulant.

Lorsque la commutation d'un moteur 20, 22 se fait en roulant, une accélération (positive, négative, positive puis négative ou bien encore négative puis positive ; une accélération négative correspondant à une décélération) peut être ressentie.

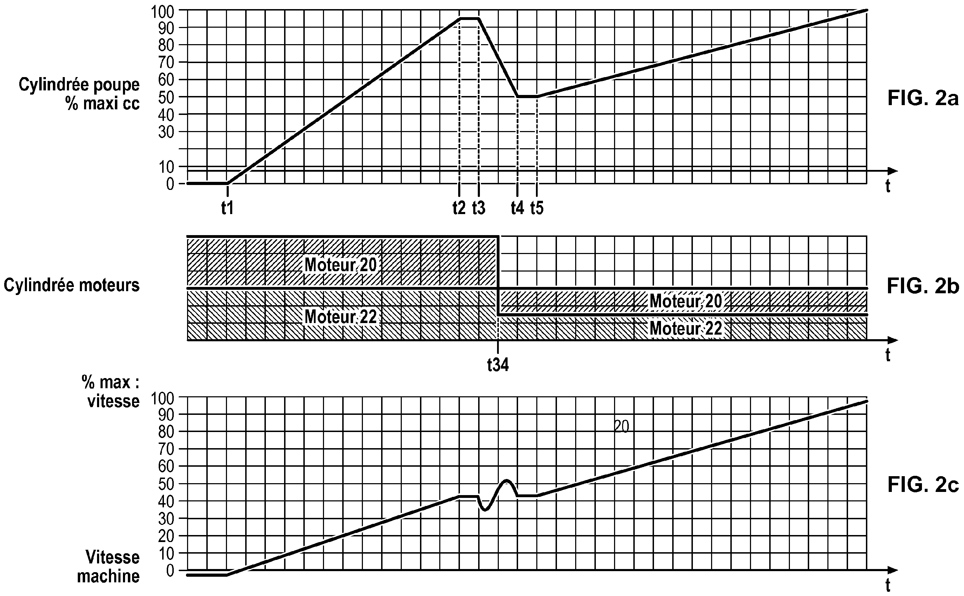

Dans l'état de la technique, il est connu de tenter de réduire cette accélération en synchronisant le changement du mode d'alimentation des moteurs avec un saut de cylindrée de la pompe comme illustré sur les figures 2a, 2b et 2c.

La figure 2a représente une variation de cylindrée de la pompe 10 en fonction du temps. Sur la figure 2a, on observe une augmentation connue de la cylindrée de la pompe 10 entre les instants t1 et t2, une cylindrée stable entre les instants t2 et t3, une décroissance de cylindrée entre les instants t3 et t4, une stabilité de la cylindrée entre les instants t4 et t5, puis une nouvelle progression de la cylindrée avec une pente plus faible qu'entre les instants t1 et t2.

La figure 2b représente les cylindrées respectives des moteurs 20, 22, c'est-à-dire le volume d'huile consommé par chacun des moteurs 20, 22.

On observe une réduction de moitié de la cylindrée de chacun des moteurs 20 et 22 à un instant t34 compris entre les instants t3 et t4.

La figure 2c représente la variation de vitesse de l'engin en fonction du temps. La figure 2c illustre les variations de vitesse et les accélérations/décélérations induites entre les instants t2 à t5, plus particulièrement entre t3 et t4.

Le document US 6119802 décrit un système de transmission hydrostatique comprenant au moins une pompe et au moins deux moteurs-roues répartis en plusieurs groupes alimentés par la pompe pour la motorisation d'un engin, afin de commander les moteurs successivement pour adapter les paramètres de motorisation à la demande.

Le but de la présente invention est maintenant de réduire les accélérations et décélérations durant le changement de mode d'alimentation des moteurs, c'est-à-dire lorsque l'on change la cylindrée sur les moteurs 20, 22 d'un engin.

Les buts précités sont atteints dans le cadre de la présente invention grâce à un système de transmission hydrostatique tel que défini en revendication 1 annexée.

Selon d'autres caractéristiques avantageuses de l'invention :
- le système de commande adapté pour décaler dans le temps un changement de cylindrée des moteurs en plusieurs groupes afin d'avoir une évolution progressive de la cylindrée apparente des moteurs,
   contrôle le changement de cylindrée des moteurs pendant le temps de changement de cylindrée de la pompe,
- la décomposition des changements de cylindrée de moteurs est opérée par un changement de cylindrée du moteur situé d'un côté de l'engin, puis par le changement de cylindrée du moteur situé de l'autre côté de l'engin,
- chaque groupe de moteurs comprend un seul moteur,
- chaque groupe de moteurs comprend plusieurs moteurs,
- lorsqu'un changement de vitesse ou de couple sur un engin est demandé, nécessitant un changement de la cylindrée total du circuit, sur au moins deux moteurs multi-cylindrées, on échelonne le changement de la cylindrée de moteur sur un créneau de temps T,
- le système de commande de cylindrée conformes à l'invention est adapté pour définir une cylindrée intermédiaire du circuit en pilotant d'une manière différenciée dans le temps au moins deux tiroirs de sélection (de cylindrée ou de court-circuit),
- Le créneau de temps T sur lequel l'on échelonne le décalage de changement de cylindrée des moteurs, au minimum, correspond au temps nécessaire à la pompe, et de préférence également aux moteurs, en fonction de leur vitesse de réaction, pour effectuer le changement de cylindrée correspondant,
- le créneau de temps sur lequel est opéré le changement de cylindrée des moteurs est inclus dans le temps nécessaire à la pompe en fonction de sa vitesse de réaction, pour opérer le changement de cylindrée correspondant.
- la décomposition du changement de cylindrée des moteurs en plusieurs groupes, afin d'avoir une évolution de la cylindrée apparente des moteurs progressive, est adaptée pour approcher l'évolution de la cylindrée de la pompe durant son saut de cylindrée,
- les créneaux de temps T sur lesquels on échelonne le décalage du changement de cylindrée des moteurs, au minimum, correspondent au temps nécessaire aux tiroirs de commande de moteur, en fonction de leur temps de réaction.
- Dans le cadre de l'invention, les moteurs sont de préférence des moteurs à came et pistons radiaux.

L'invention propose également un procédé de pilotage de cylindrée de moteur-roue tel que défini en revendication annexée.

L'invention concerne également les véhicules ou engins comportant le système de transmission hydrostatique du type précité et/ou mettant en œuvre le procédé de pilotage de cylindrées de moteurs précités.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 précédemment décrite représente la structure générale d'une transmission hydrostatique comprenant une pompe et deux moteurs-roues connus de l'état de la technique,
- les figures 2a, 2b et 2c précédemment décrites illustrent respectivement la variation de cylindrée de la pompe, la variation de cylindrée des moteurs et la variation de vitesse d'un engin ainsi équipé du circuit représenté sur la figure 1 connu de l'état de la technique,

- la figure 3 représente une vue schématique d'un circuit conforme à la présente invention,
- les figures 4a, 4b et 4c représentent respectivement la variation de cylindrée de la pompe, la variation de cylindrée des moteurs et la variation de vitesse de l'engin équipé d'un circuit conforme à la figure 3,
- la figure 5 représente une variante de réalisation d'un circuit conforme à la présente invention comprenant quatre moteurs-roues,
- les figures 6 et 7 représentent schématiquement deux organigrammes de fonctionnement d'un système hydrostatique conforme à la présente invention,
- la figure 8 reprend le circuit de la figure 3 en illustrant schématiquement la structure générale de moteurs à multicylindrées associés à des tiroirs sélecteurs de changement de cylindrée,
- la figure 9 reprend le circuit de la figure 5 en illustrant schématiquement la structure générale de moteurs à multicylindrées associés à des tiroirs sélecteurs de changement de cylindrée,
- les figures 10 et 11 sont des représentations schématiques, respectivement selon une vue en coupe transversale et une vue en coupe longitudinale, de moteurs à pistons radiaux utilisés de préférence dans le cadre de la présente invention.

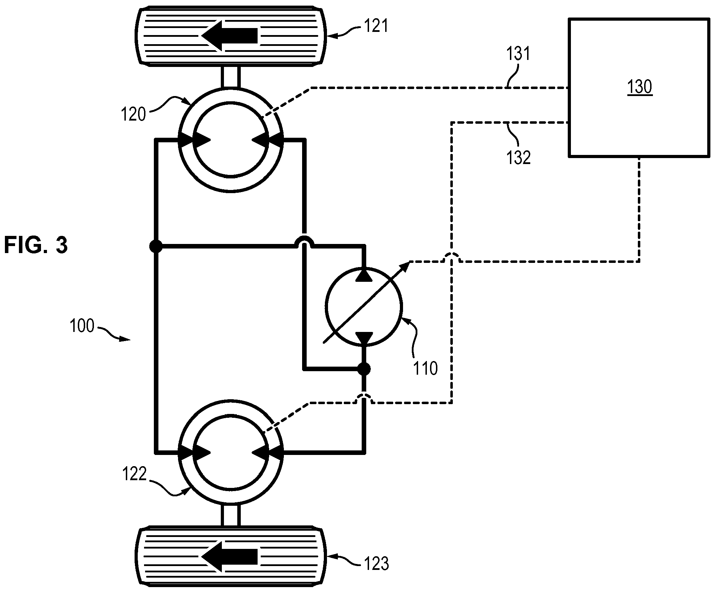

On a représenté schématiquement sur la figure 3 annexée, un système 100 de transmission hydrostatique conforme à la présente invention comprenant une pompe 110 et deux moteurs-roues 120, 122 associés respectivement à des roues droite 121 et gauche 123 et alimentés par la pompe 110 pour la motorisation d'un engin.

La pompe 110 est de préférence actionnée par un moteur thermique non illustré sur la figure 3 pour simplifier l'illustration.

Le changement de cylindrée de la pompe 110 et des moteurs-roues 120, 122 est piloté par un module de commande 130.

Comme indiqué précédemment, le module 130 est adapté pour décaler dans le temps un changement de cylindrée des moteurs 120, 122 en plusieurs groupes, deux groupes formés respectivement du moteur 123 gauche et du moteur 121 droit en l'espèce, afin d'avoir une évolution progressive de la cylindrée apparente des moteurs.

Plus précisément, le module 130 est de préférence adapté pour décaler dans le temps le changement de cylindrée des moteurs 120, 122 de sorte que l'évolution progressive de la cylindrée apparente des moteurs soit la plus proche possible de la variation de cylindrée de la pompe 110 lors de son saut de cylindrée.

Comme on le voit sur la figure 3, à cette fin les cylindrées des moteurs 120, 122 sont pilotées par des sorties différentes 131, 132 du module de commande 130.

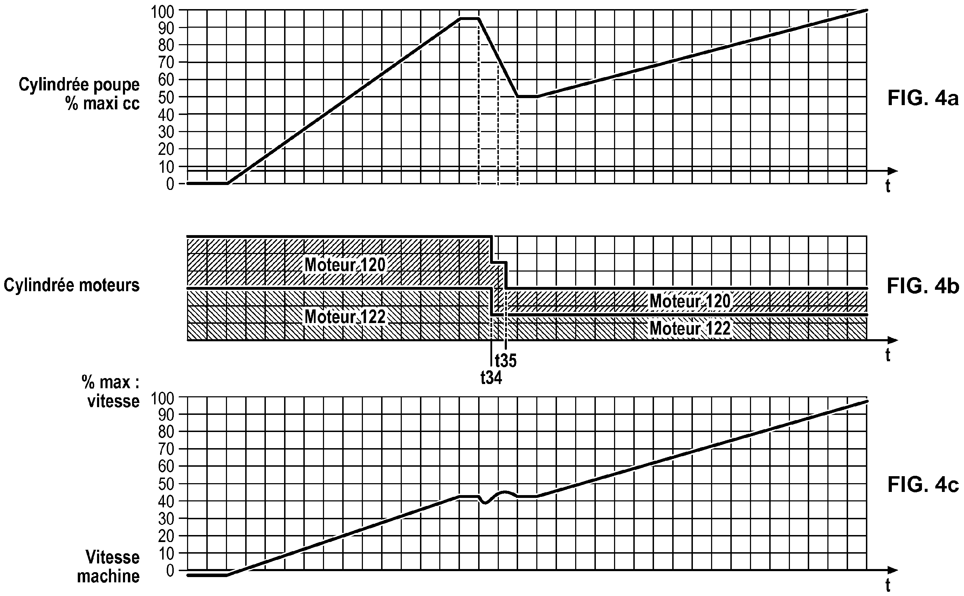

Les avantages de l'invention résulteront de l'examen des figures 4a, 4b et 4c en comparaison avec les figures homologues 2a, 2b et 2c résultant de l'état de la technique.

L'examen comparé des figures 2c et 4c montre en effet que la variation de vitesse de l'engin et illustré sur la figure 4c, dans le cadre de l'invention est beaucoup moins sujet à des évolutions, accélérations ou décélérations notables que sur les engins conformes à l'état de la technique, tel qu'illustré sur la figure 2c.

Ceci est dû au fait que comme illustré sur la figure 4b, le changement de cylindrée des moteurs 120 et 122 est décalé dans le temps.

La réduction de cylindrée du moteur 122 est opérée à l'instant t34 sur la figure 4b tandis que le changement de cylindrée du moteur 120 est opéré à l'instant t35 sur la figure 4b.

Lors du changement de cylindrée des moteurs 120, 122, il y a un ajustage de la cylindrée de la pompe 110, pour obtenir la continuité de la vitesse.

Le changement de cylindrée de la pompe 110 est assez lent. Le décalage dans le temps du changement de cylindrée des moteurs 120, 122, beaucoup plus rapide, pendant le mouvement d'ajustage de cylindrée de la pompe 110 permet, en évitant de commuter en même temps les deux moteurs-roues 120, 122, et au contraire en décalant leur changement de cylindrée dans le temps, de lisser la vitesse comme illustré sur la figure 4b.

Sans la mise en œuvre de l'invention, un changement de cylindrée brutal des moteurs, concomitant avec un ajustage de cylindrée de la pompe, donne de fortes secousses, comme illustré sur la figure 2b.

Au contraire, l'invention permet d'éviter ces secousses comme illustré sur la figure 4b.

Lors d'un changement de cylindrée sur un essieu, si les deux moteurs 120, 122 changent leur cylindrée en même temps selon l'état de la technique, le véhicule subit un freinage et une accélération intempestifs.

Pour lisser ces inconvénients, la présente invention opère donc un décalage dans le temps de changement de cylindrée des moteurs. Le décalage dans le temps correspond au temps nécessaire pour l'ajustement de cylindrée de la pompe.

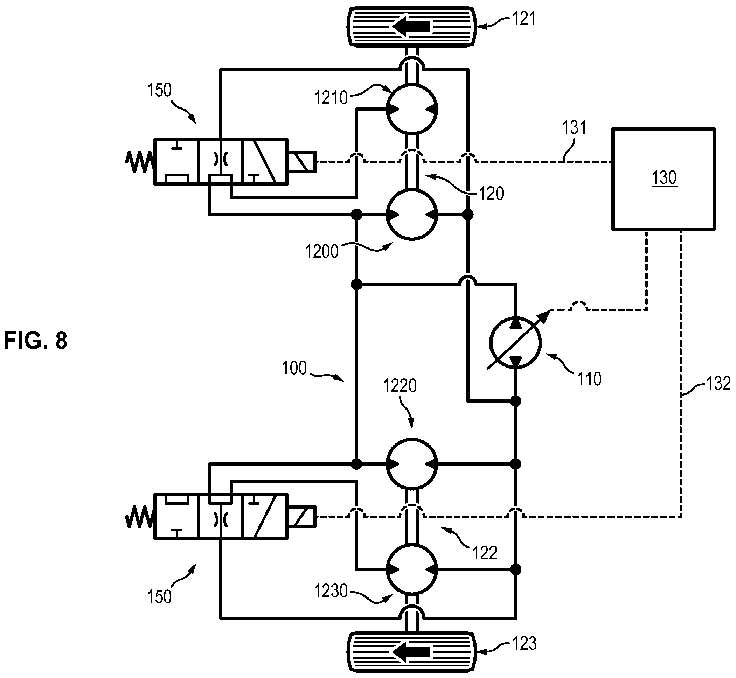

Cette solution impose d'avoir une électrovanne de commande par moteur ou groupe de moteurs, comme on l'a schématisé sur la figure 8.

Lors du roulage, le calculateur suit la demande du conducteur, en particulier pour piloter la pompe 110, et réaliser la consigne de vitesse, d'accélération, ou de décélération demandée.

Au moment du changement de cylindrée des moteurs 120, 122, le calculateur réalise le processus par lui-même, en pilotant la pompe 110 et en déclenchant le changement de cylindrée des moteurs 120, 122, puis reprend le suivi de la demande du conducteur.

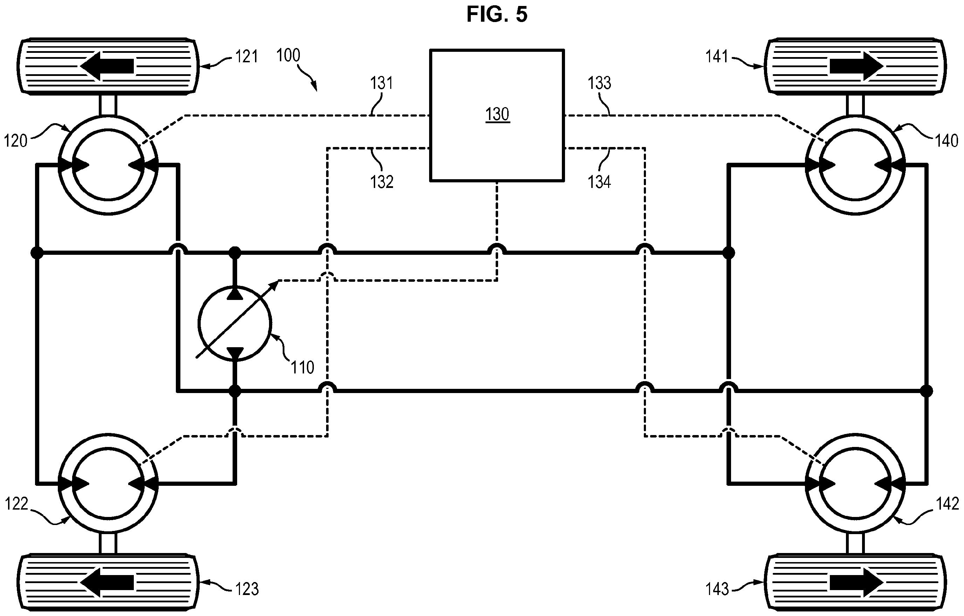

L'invention s'applique également, comme illustré sur la figure 5, au cas d'un système de transmission hydrostatique pour lequel chaque groupe de moteurs comprend plusieurs moteurs, par exemple chaque groupe de moteurs comprenant deux moteurs.

On a en effet illustré sur la figure 5, un système de transmission hydrostatique conforme à une variante de l'invention comprenant deux essieux respectivement avant et arrière : un essieu avant comprenant une roue droite 121 associée à un moteur roue 120 et une roue gauche 123 associée à un moteur roue 122 et un essieu arrière comprenant un moteur-roue droit 140 associé à une roue droite 141 et un moteur-roue gauche 142 associé à une roue 143.

La pompe 110 qui alimente les quatre moteurs 120, 122 et 140, 142 est pilotée en cylindrée, ainsi que les moteurs 120, 122, 140 et 142, par un module de commande 130 ayant les mêmes fonctions que le module décrit précédemment au regard de la figure 3.

Les groupes de moteurs selon la figure 4 peuvent être composés soit pour l'un des deux moteurs-roues droit 120 et 140 et l'autre des deux moteurs-roues gauche 122, 142 ou en variante pour l'un d'un moteur gauche et d'un moteur droit et l'autre des deux moteurs complémentaires.

Selon l'illustration donnée sur la figure 5, les cylindrées des moteurs 120, 122, 140, 142 sont pilotées par des sorties différentes 131, 132, 133 et 134 du module de commande 130. En variante l'on peut prévoir des sorties du module de commande 130 communes aux moteurs d'un même groupe.

L'optimisation dans le temps du changement de cylindrée des moteurs gauche et droit ou tout autre groupe de moteurs, dans le cadre de l'invention, peut aussi permettre de palier à une différence de réactivité due à un tuyautage asymétrique dans les conduits reliant la pompe 110 aux différents moteurs.

Par rapport à l'état de la technique, la présente invention offre notamment les avantages suivants :
- meilleur confort pour les passagers,
- processus de meilleure qualité, en évitant par exemple de générer les oscillations d'avant en arrière des rampes d'un pulvérisateur dans un champ.
- amélioration du ressenti lors d'un changement de cylindrée (montée ou descente) en changeant la cylindrée d'un moteur (ou d'un groupe de moteurs) puis d'un autre moteur (ou d'un autre groupe de moteurs). L'invention permet ainsi d'apporter des accélérations et décélérations plus régulières et donc plus de confort et une régularité dans le processus appliqué par l'engin.

La présente invention peut s'appliquer à la transmission de nombreux types d'engins, évidemment de préférence des engins roulants, tels que pulvérisateurs, transports de personnes, balayeuses, tracteurs, voire toutes machines tournantes avec forte inertie.

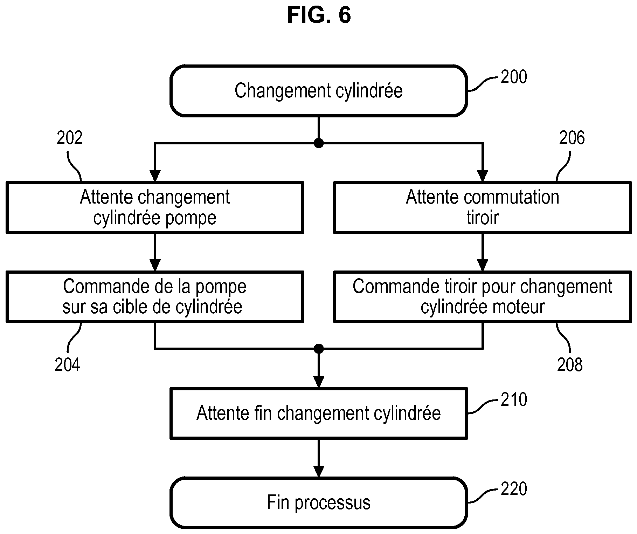

La figure 6 illustre schématiquement les étapes principales d'un procédé de gestion des moteurs conforme à la présente invention.

On aperçoit sur la figure 6 une étape initiale 200 qui correspond à une requête de changement de cylindrée.

L'étape 200 est suivie d'une étape 202 de mise en attente du changement de cylindrée de la pompe 110 pendant un temps prédéfini dépendant des caractéristiques du système. L'étape 202 est suivie d'une étape 204 de commande de la pompe 110 de sorte que celle-ci atteigne sa cible de cylindrée.

En parallèle des étapes 202 et 204, après l'étape initiale 200, le processus met en œuvre une étape 206 de mise en attente du changement de position d'un tiroir de pilotage de changement de cylindrée des moteurs pendant un temps prédéfini dépendant des caractéristiques du système, puis une étape 208 de commutation du tiroir de pilotage de cylindrée des moteurs de sorte que ceux-ci atteignent leur cible de cylindrée.

Les étapes 204 et 208 sont suivies d'une étape 210 de détection du bon accomplissement du changement de cylindrée demandé.

L'étape finale du processus, lorsque le changement de cylindrée est accompli, est référencée 220.

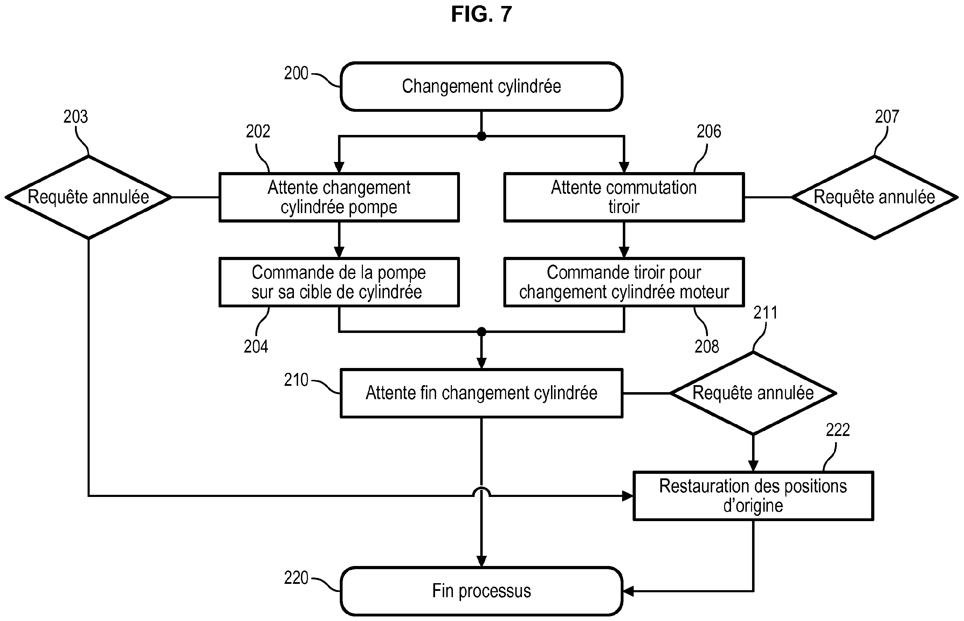

La figure 7 illustre une variante de procédé de gestion des moteurs conforme à la présente invention selon laquelle les étapes 202, 206 et 210 sont associées à des étapes 203, 207 et 211 de détection d'une requête d'annulation du changement de cylindrée, suivie lors d'une telle détection d'une étape 222 de restauration des positions d'origine de la pompe, du tiroir de pilotage de changement de cylindrée des moteurs, et par conséquent des moteurs associés.

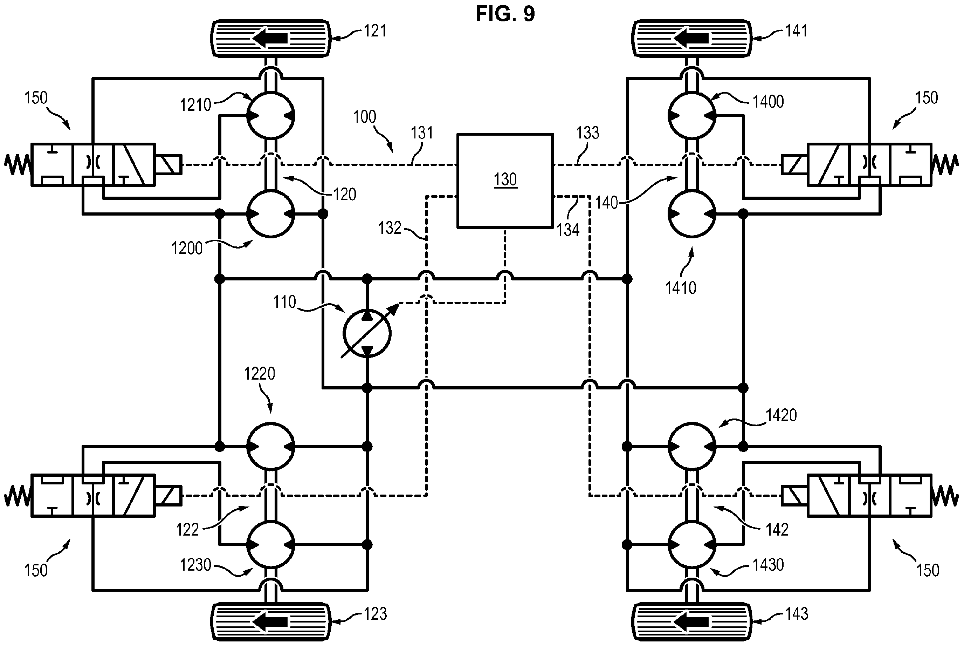

On a représenté schématiquement sur les figures 8 et 9 annexées des exemples de réalisation de moteurs 120, 122, 140, 142 à multi-cylindrées pilotés de façon connue en soi par des tiroirs sélecteurs de cylindrée 150 respectifs (tiroirs hydrauliques de changement de cylindrée). Les moteurs 120, 122, 140, 142 illustrés sur les figures 8 et 9 comportent deux cylindrées 1200, 1210; 1220, 1230; 1400, 1410; 1420, 1430 couplés à des arbres de roue commun. Les sélecteurs 150 peuvent être intégrés aux moteurs 120, 122, 140, 142. Ils peuvent être pilotés électriquement ou hydrauliquement.

Les sélecteurs 150 illustrés sur les figures 8 et 9 présentent trois positions. La position centrale est une position fugitive ou transitoire entre deux états stables. Cette position centrale, qui n'est qu'une étape intermédiaire de confort, peut cependant être supprimée.

L'étape intermédiaire, si elle est calibrée différemment par moteur, peut permettre un décalage du changement de cylindrée par moteur, pour une commande unique.

En variante sans l'étape intermédiaire, un calibrage différent du ressort de rappel, ou un calibrage différent de l'orifice de commande, ou de l'orifice de drain (non représenté) du tiroir sélecteur 150, ou l'ajout d'une chambre d'amortissement sur un port associé à un sélecteur, peut ralentir le mouvement d'un tiroir, et créer le décalage souhaité dans le changement de cylindrée.

Les sélecteurs 150 illustrés sur les figures 8 et 9 sont à commande électrique. Le montage représenté permet de les connecter directement à un module de commande 130 qui comporte des sorties de pilotage électrique. Les sélecteurs représentés comportent un ressort de rappel qui crée une première position stable de repos en l'absence de signal électrique, et une deuxième position stable lorsqu'il y a un signal électrique.

Selon une variante de réalisation les tiroirs 150 sont pilotés électriquement, pneumatiquement ou hydrauliquement pour assurer des décalages dans le temps entre les commutations des tiroirs 150 et par conséquent des décalages dans le temps entre les commutations de cylindrée des différents moteurs. Pour piloter les tiroirs 150 par commande pneumatiques ou hydrauliques, il faut ajouter une interface pneumatique ou hydraulique entre le boitier 130 et les tiroirs 150.

En variante, il est possible d'utiliser un module de commande 130 à une seule sortie de pilotage de changement de cylindrée, mais en utilisant des tiroirs de sélection 150 ayant une constante de temps différente sur chaque groupe de moteur. Cela revient à avoir une étape fugitive plus ou moins longue, ou une vitesse de réaction des tiroirs 150 plus ou moins élevée.

Néanmoins, si on veut pouvoir piloter le changement de cylindrée de manière optimisée, un pilotage individuel des tiroirs de changement de cylindrée 150 est préféré.

L'homme de l'art comprendra à l'examen des figures 8 et 9 que dans une position stable les deux sous-moteurs 1200, 1210; 1220, 1230; 1400, 1410; 1420, 1430 de chaque moteur 120, 122, 140, 142 sont alimentés et donc les moteurs 120, 122, 140, 142 sont en grande cylindrée, tandis que dans l'autre position stable, seul l'un des sous-moteurs 1200; 1220; 1400; 1420 de chaque moteur 120, 122, 140, 142 est alimenté, l'autre sous-moteur 1210; 1230; 1410; 1430 de chaque moteur 120, 122, 140, 142 étant isolé du circuit et ne participant pas à la motricité, de sorte que les moteurs 120, 122, 140, 142 sont alors en petite cylindrée.

La représentation des tiroirs de commande 150 illustrés sur les figures 8 et 9 annexées n'est que schématique. En pratique, la constitution des tiroirs, leur nombre de ports d'entrée et de sortie et leur nombre de position, peuvent varier dès lors que ces tiroirs assurent la fonction précitée de relier dans une position les moteurs élémentaires 1200, 1210; 1220, 1230; 1400, 1410; 1420, 1430 de chaque moteur 120, 122, 140, 142 en parallèle pour fournir une cylindrée maximale et au contraire dans une autre position d'isoler un moteur élémentaire 1210; 1230; 1410; 1430 du circuit pour fournir une petite cylindrée.

La structure de moteurs à multicylindrées pilotés par un sélecteur telle que schématisée sur les figures 8 et 9 est bien connue de l'homme de l'art. La société Poclain commercialise de tels moteurs depuis de nombreuses années. Une telle structure est notamment décrite dans le document FR 2 794 496. Elle ne sera donc pas décrite plus en détail par la suite.

Plus précisément, dans le cadre de la présente invention, les moteurs hydrauliques 120, 122, 140, 142 sont de préférence des moteurs à pistons radiaux.

Le demandeur a déjà proposé de nombreux modèles de tels machines hydrauliques à pistons radiaux. On trouvera des exemples de tels machines notamment dans les documents FR 2 796 992, FR 2 834 011, FR 2 834 012 et FR 2 587 761. Leur structure ne sera donc pas décrite dans le détail par la suite.

L'on rappelle cependant que comme représenté en coupe transversale sur la figure 10 et en coupe longitudinale sur la figure 11 (laquelle correspond à la figure 1 de FR 2 834 012), les machines hydrauliques à pistons radiaux comprennent généralement dans un carter 1000 :
- une came multilobes 1020 formée de préférence sur la surface interne d'un élément du carter 1000,
- un bloc cylindres 1030 monté à rotation relative dans le carter,
- un arbre 1040 lié à rotation au bloc cylindres 300,
- des pistons 1050 guidés à coulissement radial dans des cylindres respectifs 1052 du bloc cylindres et prenant appui sur les lobes de la came 1020, et
- un distributeur 1060 adapté pour appliquer successivement de manière contrôlée un fluide sous pression sur les pistons 1050, de sorte que l'appui successif des pistons 1050 sur les lobes de la came 1020 entraîne la rotation relative du bloc cylindres 1030 et des éléments qui lui sont liés par rapport au carter.

Les machines à pistons radiaux peuvent cependant faire l'objet de nombreuses variantes. La came multilobe peut être formée non pas sur une surface interne d'un élément de carter, mais sur une surface externe d'un arbre. Les machines peuvent être à came fixe et arbre tournant ou bien à arbre fixe et came tournante.

Par ailleurs selon la figure 11 annexée, conformément à l'enseignement de FR 2 834 012, le distributeur 1060 comporte par exemple trois gorges 1061, 1062 et 1063 associées à des conduits de distribution respectifs, tels que 1064, débouchant sur la face du distributeur adjacente au bloc cylindres 1030 pour contrôler l'alimentation en fluide et l'échappement des cylindres 1052, et un sélecteur 1065 qui selon sa position modifie la liaison des gorges 1061, 1062 et 1063 et permet ainsi de contrôler la cylindrée de la machine. Un distributeur à trois gorges peut définir une machine à deux sous cylindrées. La définition de chaque sous cylindrée de la machine peut se faire par groupes de pistons ou par groupe de lobes de came.

Dans le cadre de l'invention les moteurs 120, 122, 140, 142 sont généralement et préférentiellement à la vitesse des roues.

Dans le cadre de l'invention, le décalage dans le temps du changement de cylindrée des différents moteurs peut être piloté mécaniquement, et/ou hydrauliquement, voire encore par une programmation de logiciel.

## Revendications

1. Système de transmission hydrostatique comprenant :
- au moins une pompe (110),
- au moins deux moteurs-roues (120, 122 ; 140, 142) alimentés par la pompe (110) pour la motorisation d'un engin,
**caractérisé par le fait qu'**il comprend un système de commande (130) adapté pour commencer un changement de cylindrée de la pompe (110) requis pour atteindre une cible de cylindrée de pompe imposée par une demande de changement de cylindrée de moteurs, décaler dans le temps un changement de cylindrée des moteurs (120, 122 ; 140, 142) en plusieurs groupes afin d'avoir une évolution progressive de la cylindrée apparente des moteurs, pour éviter de commuter en même temps deux moteurs ayant reçu une consigne d'évolution, puis terminer le changement de cylindrée de la pompe lorsque la cible de cylindrée de pompe est atteinte.

2. Système selon la revendication 1, **caractérisé par le fait que** le système de commande (130) adapté pour décaler dans le temps un changement de cylindrée des moteurs (120, 122 ; 140, 142) en plusieurs groupes afin d'avoir une évolution progressive de la cylindrée apparente des moteurs, contrôle le changement de cylindrée des moteurs (120, 122 ; 140, 142) pendant le temps de changement de cylindrée de la pompe (110).

3. Système selon l'une des revendications 1 ou 2, **caractérisé par le fait que** la décomposition des changements de cylindrée des moteurs est opérée par un changement de cylindrée successif des moteurs situés des deux côtés de l'engin.

4. Système selon l'une des revendications 1 à 3, **caractérisé par le fait que** chaque groupe de moteurs comprend un seul moteur (120, 122).

5. Système selon l'une des revendications 1 à 3, **caractérisé par le fait que** chaque groupe de moteur comprend plusieurs moteurs (120, 140 ; 122, 142).

6. Système selon l'une des revendications 1 à 5, **caractérisé par le fait que** le système de commande pilote un passage par une cylindrée intermédiaire du circuit pilotant de manière différenciée dans le temps au moins deux tiroirs de sélection (150).

7. Système selon l'une des revendications 1 à 6, **caractérisé par le fait que** le créneau de temps sur lequel est opéré le changement de cylindrée des moteurs (120, 122 ; 140, 142), au minimum, correspond au temps nécessaire à la pompe (110) en fonction de sa vitesse de réaction, pour opérer le changement de cylindrée correspondant.

8. Système selon la revendication 7 **caractérisé en ce que** le créneau de temps sur lequel est opéré le changement de cylindrée des moteurs (120, 122 ; 140, 142) est inclus dans le temps nécessaire à la pompe (110) en fonction de sa vitesse de réaction, pour opérer le changement de cylindrée correspondant.

9. Système selon l'une des revendications 1 à 8, **caractérisé par le fait que** le créneau de temps sur lequel est opéré le changement de cylindrée du moteur correspond au temps nécessaire aux tiroirs (150) de pilotage des moteurs (120, 122 ; 140, 142), en fonction de leur temps de réaction.

10. Système selon l'une des revendications 1 à 9, **caractérisé par le fait que** le créneau de temps entre deux décalages de cylindrée de moteur est au moins le temps nécessaire à la pompe (110) et aux moteurs (120, 122 ; 140, 142) pour un changement de cylindrée, et de préférence de l'ordre de grandeur de plusieurs fois le temps nécessaire à la pompe (110) pour un changement de cylindrée.

11. Système selon l'une des revendications 1 à 10, **caractérisé par le fait que** les moteurs (120, 122 ; 140, 142) sont des moteurs à came et pistons radiaux.

12. Système selon l'une des revendications 1 à 11, **caractérisé par le fait que** le changement de cylindrée est opéré par une programmation logicielle, une commande mécanique ou une commande hydraulique.

13. Procédé de pilotage de cylindrée de moteurs-roues mettant en œuvre le système conforme à l'une des revendications 1 à 12, **caractérisé en ce qu'**il comprend les étapes consistant à commencer un changement de cylindrée de la pompe (110) requis pour atteindre une cible de cylindrée de pompe imposée par une demande de changement de cylindrée de moteurs, décaler dans le temps un changement de cylindrée de moteurs (120, 122 ; 140, 142) en plusieurs groupes afin d'avoir une évolution progressive de la cylindrée apparente des moteurs, puis terminer le changement de cylindrée de la pompe (110) correspondant à la nouvelle cylindrée des moteurs lorsque la cible de cylindrée de pompe est atteinte.

14. Véhicule ou engin comportant un système de transmission hydrostatique conforme à l'une des revendications 1 à 12 et/ou en mettant en œuvre un procédé de pilotage de cylindrée de moteurs selon la revendication 13.

## Patentansprüche

1. Hydrostatisches Übertragungssystem, umfassend
- wenigstens eine Pumpe (110);
- wenigstens zwei Radmotoren (120, 122; 140, 142), die von der Pumpe (110) für die Motorisierung einer Maschine versorgt sind,
**gekennzeichnet durch** die Tatsache, dass es ein Steuersystem (130) umfasst, das geeignet ist, um eine Hubraumänderung der Pumpe (110) zu beginnen, die zum Erreichen eines Hubraumziels der Pumpe notwendig ist, das von einer Anfrage zur Hubraumänderung von Motoren aufgezwungen ist, eine Hubraumänderung der Motoren (120, 122; 140, 142) im Zeitverlauf in mehrere Gruppen zu verschieben, um eine progressive Entwicklung des sichtbaren Hubraums der Motoren zu haben, um ein gleichzeitiges Umschalten von zwei Motoren zu vermeiden, die eine Entwicklungsanweisung erhalten haben, um die Hubraumänderung der Pumpe zu beenden, wenn das Hubraumziel der Pumpe erreicht ist.

2. System gemäß Anspruch 1, **gekennzeichnet durch** die Tatsache, dass das Steuersystem (130), das zum Verschieben im Zeitverlauf einer Hubraumänderung der Motoren (120, 122; 140, 142) in mehrere Gruppen geeignet ist, um eine progressive Entwicklung des sichtbaren Hubraums der Motoren zu haben, die Hubraumänderung der Motoren (120, 122; 140, 142) während der Zeit der Hubraumänderung der Pumpe (110) kontrolliert.

3. System gemäß einem der Ansprüche 1 oder 2, **gekennzeichnet durch** die Tatsache, dass die Aufgliederung der Hubraumänderungen der Motoren durch eine sukzessive Hubraumänderung der Motoren bewirkt ist, die auf beiden Seiten der Maschine angeordnet sind.

4. System gemäß einem der Ansprüche 1 bis 3, **gekennzeichnet durch** die Tatsache, dass jede Gruppe von Motoren einen einzigen Motor (120, 122) umfasst.

5. System gemäß einem der Ansprüche 1 bis 3, **gekennzeichnet durch** die Tatsache, dass jede Gruppe von Motoren mehrere Motoren (120, 140; 122, 142) umfasst.

6. System gemäß einem der Ansprüche 1 bis 5, **gekennzeichnet durch** die Tatsache, dass das Steuersystem ein Durchtreten durch einen Zwischenhubraum des Schaltkreises auf differenzierte Weise im Zeitverlauf von wenigstens zwei Auswahlschubladen (150) lenkt.

7. System gemäß einem der Ansprüche 1 bis 6, **gekennzeichnet durch** die Tatsache, dass das Zeitfenster, in dem die Hubraumänderung der Motoren (120, 122; 140, 142) bewirkt ist, mindestens der für die Pumpe (110) in Abhängigkeit von ihrer Reaktionsgeschwindigkeit zum Bewirken der entsprechenden Hubraumänderung notwendigen Zeit entspricht.

8. System gemäß Anspruch 7, **gekennzeichnet durch** die Tatsache, dass das Zeitfenster, in dem die Hubraumänderung der Motoren (120, 122; 140, 142) bewirkt geführt ist, in der für die Pumpe (110) in Abhängigkeit von ihrer Reaktionsgeschwindigkeit zum Bewirken der entsprechenden Hubraumänderung notwendigen Zeit enthalten ist.

9. System gemäß einem der Ansprüche 1 bis 8, **gekennzeichnet durch** die Tatsache, dass das Zeitfenster, in dem die Hubraumänderung des Motors bewirkt ist, der für die Lenkungsschubladen der Motoren (120, 122; 140, 142) in Abhängigkeit von ihrer Reaktionszeit notwendigen Zeit entspricht.

10. System gemäß einem der Ansprüche 1 bis 9, **gekennzeichnet durch** die Tatsache, dass das Zeitfenster zwischen zwei Hubraumverschiebungen des Motors wenigstens die für die Pumpe (110) und die Motoren (120, 122; 140, 142) für eine Hubraumänderung notwendige Zeit und bevorzugt in der Größenordnung von mehreren Malen der für die Pumpe (110) für eine Hubraumänderung notwendige Zeit ist.

11. System gemäß einem der Ansprüche 1 bis 10, **gekennzeichnet durch** die Tatsache, dass die Motoren (120, 122; 140, 142) Motoren mit Nocken und radialen Kolben sind.

12. System gemäß einem der Ansprüche 1 bis 11, **gekennzeichnet durch** die Tatsache, dass die Hubraumänderung durch eine Softwareprogrammierung, eine mechanische Steuerung oder eine hydraulische Steuerung bewirkt ist.

13. Steuerverfahren des Hubraums von Radmotoren, das das System gemäß einem der Ansprüche 1 bis 12 umsetzt, **dadurch gekennzeichnet, dass** es die Schritte umfasst, die darin bestehen, eine Hubraumänderung der Pumpt (110) zu beginnen, die zum Erreichen eines Hubraumziels der Pumpe erforderlich ist, das von einer Anfrage zur Hubraumänderung von Motoren aufgezwungen wird, im Zeitverlauf eine Hubraumänderung von Motoren (120, 122; 140, 142) in mehrere Gruppen zu verschieben, um eine progressive Entwicklung des sichtbaren Hubraums des Motoren zu haben, um die Hubraumänderung der Pumpe (110) zu beenden, die dem neuen Hubraum der Motoren entspricht, wenn das Hubraumziel der Pumpe erreicht ist.

14. Fahrzeug oder Motor, umfassend ein hydrostatisches Übertragungssystem gemäß einem der Ansprüche 1 bis 12 und/oder durch Umsetzen eines Steuerverfahrens des Hubraums von Motoren gemäß Anspruch 13.

## Claims

1. Hydrostatic transmission system comprising:
- at least one pump (110),
- at least two wheel motors (120, 122; 140, 142) supplied by the pump (110) for the motorisation of an engin,
**characterised by** the fact that it comprises a command system (130) suited to beginning a change of displacement of the pump (110) required to reach a pump displacement target imposed by a request for change of displacement of the motors, offsetting over time a change of displacement of the motors (120, 122; 140, 142) in several groups in order to have a progressive evolution of the apparent displacement of the motors, to avoid switching at the same time two motors having received an evolution instruction, then terminating the change of displacement of the pump when the target pump displacement is reached.

2. System according to claim 1, **characterised by** the fact that the command system (130), suited to offsetting over time a change of displacement of the motors (120, 122; 140, 142) in several groups in order to have a progressive evolution of the apparent displacement of the motors, controls the change of displacement of the motors (120, 122; 140, 142) during the time of change of displacement of the pump (110).

3. System according to one of claims 1 or 2, **characterised by** the fact that the breakdown of the changes of displacement of the motors takes place by a successive change of displacement of the motors situated on the two sides of the engin.

4. System according to one of claims 1 to 3, **characterised by** the fact that each group of motors comprises a single motor (120, 122).

5. System according to one of claims 1 to 3, **characterised by** the fact that each motor group comprises several motors (120, 140; 122, 142).

6. System according to one of claims 1 to 5, **characterised by** the fact that the command system drives a passage via an intermediate displacement of the circuit driving in a differentiated manner over time at least two selection spools (150).

7. System according to one of claims 1 to 6, **characterised by** the fact that the time slot over which takes place the change of displacement of the motors (120, 122; 140, 142), at the least, corresponds to the time necessary for the pump (110), as a function of its reaction speed, to carry out the corresponding change of displacement.

8. System according to claim 7, **characterised in that** the time slot over which takes place the change of displacement of the motors (120, 122; 140, 142) is comprised in the time necessary for the pump (110), as a function of its reaction speed, to carry out the corresponding change of displacement.

9. System according to one of claims 1 to 8, **characterised by** the fact that the time slot over which takes place the change of displacement of the motor corresponds to the time necessary for the spools (150) to drive the motors (120, 122; 140, 142), as a function of their reaction time.

10. System according to one of claims 1 to 9, **characterised by** the fact that the time slot between two offsets of displacement of motor is at least the time necessary for the pump (110) and the motors (120, 122; 140, 142) for a change of displacement, and preferably of the order of several times the time necessary for the pump (110) for a change of displacement.

11. System according to one of claims 1 to 10, **characterised by** the fact that the motors (120, 122; 140, 142) are cam motors and radial pistons.

12. System according to one of claims 1 to 11, **characterised by** the fact that the change of displacement takes place by software programming, mechanical command or hydraulic command.

13. Method for driving the displacement of wheel motors implementing the system in accordance with one of claims 1 to 12, **characterised in that** it comprises the steps consisting in beginning a change of displacement of the pump (110) required to reach a pump displacement target imposed by a request for change of displacement of the motors, offsetting over time a change of displacement of the motors (120, 122; 140, 142) in several groups in order to have a progressive evolution of the apparent displacement of the motors, then terminating the change of displacement of the pump (110) corresponding to the new displacement of the motors when the pump displacement target is reached.

14. Vehicle or engin comprising a hydrostatic transmission system in accordance with one of claims 1 to 12 and/or implementing a method for driving the displacement of motors according to claim 13.
